# EUROPEAN PATENT APPLICATION

(11) **EP 2 348 339 A1**
(43) Date of publication of application: **27.07.2011**
(21) Application number: 09826015.1
(22) Date of filing: 27.10.2009
(51) Int. Cl.: G01W 1/00, G06Q 10/00

(54) **SYSTEM FOR CREATING GAS-FLOW FIELD DATABASE AND SYSTEM FOR PREDICTING DIFFUSION STATE OF DIFFUSION MATERIAL**

(30) Priority: 12.11.2008 JP 2008289433
(71) Applicant: Mitsubishi Heavy Industries, Ltd., Tokyo 108-8215 (JP)
(72) Inventor: OHBA, Ryohji, Nagasaki-shi Nagasaki 851-0392 (JP); YONEDA, Jiro, Nagasaki-shi Nagasaki 851-0392 (JP)
(74) Representative: Intès, Didier Gérard André
(86) International application number: PCT/JP2009/068361
(87) International publication number: WO 2010/055765

(57) **Abstract**

A long-term wide-area airflow field data computing unit (101) obtains hourly airflow field data for one year by RAMS or the like using weather data of global weather reanalysis data G as entrance boundary conditions for a calculation region. An atmospheric stability calculation/addition unit (102) obtains the stabilities of the representative airflow field data of the respective airflow field data, and adds the obtained stabilities to the respective airflow field data. A wind direction-based/atmospheric stability-based classification unit (103) classifies the respective airflow field data into cases covering different combinations of wind directions and atmospheric stabilities. A wind direction-based/atmospheric stability-based airflow field database creation unit (104) selects airflow field data which are representative of the respective cases, and associates the selected representative airflow field data with the respective cases covering the different combinations of wind directions and atmospheric stabilities, thereby creating a high-precision airflow field database with a reduced computing load.

## Description

### Technical Field

This invention relates to a system for creating an airflow field database and a system for predicting the diffusion status of a diffusion material, which are designed to be capable of obtaining an accurate airflow field database with a reduced computing load, and predicting the diffusion status of a diffusion material accurately and promptly.

### Background Art

A diffusion status prediction method is under development which, if a radioactive substance is discharged from a facility handling the radioactive substance to the outside (into the atmosphere) in an accident, predicts the diffusion range of the radioactive substance and the concentration of the radioactive substance at each point or location to predict an area which may be jeopardized by the radioactive substance.

This diffusion status prediction method can be applied not only in predicting the diffusion status of the radioactive substance, but also in calculating the concentrations of gases at respective points, for example, in a case where the gases (smoke) discharged from a smokestack of a factory diffuse in the atmosphere, or in analyzing the diffusion status of a diffusion material in an analysis in environmental assessment.

In predicting by computation the diffusion status of the diffusion material discharged into the atmosphere, airflow field data are obtained first, and then diffusion field data are obtained based on the airflow field data.

In an emergency control system, for accidents in nuclear power plants, etc., it is necessary to predict and evaluate the diffusion of noxious gases over an area of several kilometers in direction around a diffusion source (nuclear power plant or the like). Under the current system, airflow field data in a steady state and/or airflow field data in a non-steady state are computed using a numerical fluid analysis (CFD: computational Fluid Dynamics) according to a numerical simulation model based on wide-area weather data. Subsequently (or simultaneously), diffusion data in a steady state are computed from the airflow field data in the steady state, or diffusion data in a non-steady state are computed from the airflow field data in the non-steady state, by use of the CFD.

The CFD refers to a computing technique for setting, in a computer, a calculation region corresponding to an actual geographic region (region on the surface of the Earth), dividing this calculation region into grids, and integrating differential equations of variables (wind speed, temperature, etc. ) at each grid point with respect to time, thereby analyzing airflow field data or diffusion field data.

With the current gas status predictive computation (computation for obtaining airflow field data), partial differential equations for analyzing atmospheric phenomena are numerically analyzed based on meteorological GPV (Grid Point Value) data and meteorological observation data such as AMEDAS data. By so doing, wind directions and wind speeds at many evaluation points (respective grid point positions) at instants in certain time increments within a span of time ranging from the instant of occurrence of an event (for example, discharge of a radioactive substance to the outside) to an instant a predetermined time later are obtained by computations; in short, airflow field data at certain time intervals or in certain time increments are obtained.

With the current diffusion status predictive computation (computation for obtaining diffusion field data), the concentrations and properties of a released diffusion material as well as the above air flow field data are substituted into diffusion equations for computing the diffusion state of the diffusion material (particles), thereby obtaining the concentrations of the diffusion material at the respective grid point positions (i.e., diffusion field data) in certain time increments.

Various forms of "the diffusion for computing the diffusion state of a diffusion material (particles)" have developed. An example of them is the HYPACT (Hybrid Particle And Concentration Transport model) code developed by the Colorado State University and ATMET, USA.

With the above-mentioned conventional technologies, however, an enormous amount of time has been taken to compute the airflow field data or the diffusion field data. The computation of the diffusion field data, in particular, has required a lengthy time.

Under these circumstances, the inventors of the present invention have already proposed a diffusion status prediction system which can predict the diffusion status in a short time (see Patent Document 1). With the proposed diffusion status prediction system, preparations are made beforehand for an airflow field database showing a gas status in a geographical region including a subject point where a diffusion source is present.
Concretely, the airflow field database is prepared beforehand in connection with a plurality of cases involving different combinations of wind directions and atmospheric stabilities.

When a diffusion material is discharged from the diffusion source, as the subject point, into the atmosphere, airflow field data involving the same wind direction and the same atmospheric stability as the wind direction and atmospheric stability obtained from the meteorological conditions at the time of the diffusion material discharge are retrieved from the airflow field database.
Using the airflow field data retrieved from the airflow field database, the diffusion status is computed by the CFD, whereby the diffusion status of the discharged material can be predicted rapidly in a short time.

The diffusion status prediction system described in Patent Document 1 will be explained by reference to Fig. 16 which is a system configuration drawing.

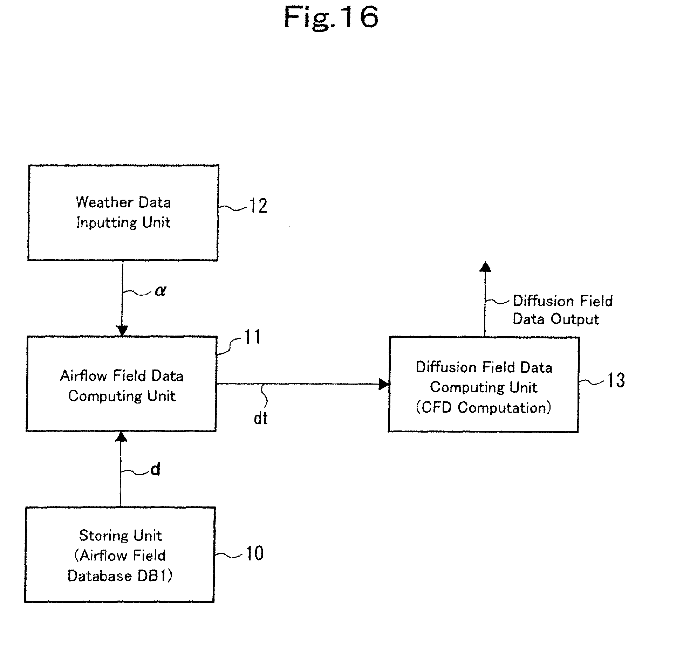

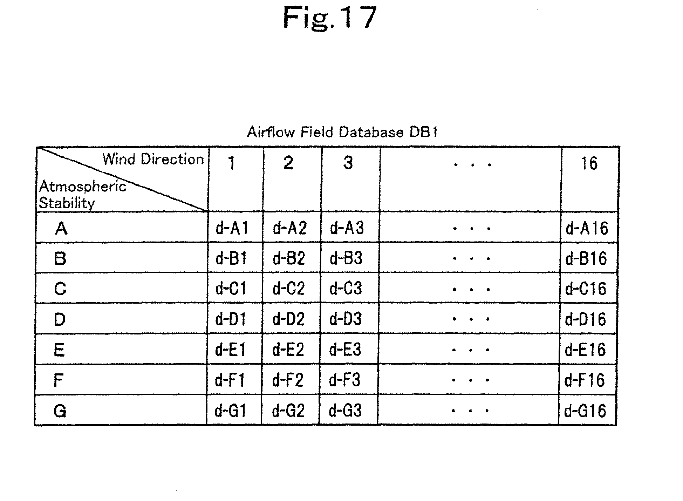

As shown in Fig. 16, a storing unit 10 has in storage an airflow field database DB1 obtained beforehand. This airflow field database DB1 is composed of airflowfielddata (d-A1 tod-G16) corresponding to 112 covering different combinations of atmospheric stabilities and wind directions, for example, as shown in Fig. 17.

Each airflow field data (e.g., d-A1) is data having a direction, a wind speed, an atmospheric temperature, a humidity, an amount of precipitation, an atmospheric pressure, etc., as data element in a combinations of a specific wind direction and a specific atmospheric stability (for example, the wind direction is 1, and the atmospheric stability is A).

An airflow field data computing unit 11 receives, as an input, weather data α at a subject date and time from a weather data inputting unit 12. The subject date and time refers to a date and time at which a diffusion material (e.g., a radioactive substance) was discharged from a diffusion source (e.g., a nuclear power plant) to the atmosphere. The weather data α has any of 16 wind directions, a wind speed, an atmospheric temperature, a humidity, an amount of precipitation, an atmospheric pressure, etc., as data elements.

The airflow field data computing unit 11 sequentially performs the following computations:
(1) From the data elements (wind speed and atmospheric temperature, in particular) of the inputted weather data α, the atmospheric stability of the weather data α is computed.
(2) Then, a plurality of airflow field data involving "wind direction and atmospheric stability" as close as possible to the "wind direction and atmospheric stability" of the weather data α are extracted from the airflow field database DB1. The extracted plural airflow field data are subjected to interpolation to obtain, by computation, new airflow field data having the same "wind direction and atmospheric stability" as the "wind direction and atmospheric stability" of the weather data α. The new airflow field data is fed, as airflow field data dt, to a diffusion field data computing unit 13.

The diffusion field data computing unit 13 substitutes the airflow field data dt into a diffusion equation for computing the diffusion state of a diffusion material (particles) to obtain diffusion field data. Thisdiffusion field data shows the diffusion status of the diffusion material (diffusion region, diffusion concentration), and the diffusion status can be predicted from the diffusion field data.

various types of "the diffusion equation for computing the diffusion state of a diffusion material (particles)" have been developed. For example, the HYPACT (Hybrid Particle And Concentration Transport Model) code developed by colorado State University and ATMET, U.S.A., is used.

According to this example, when the airflow field data dt is to be obtained, CFD computation is not performed, but airflow field data involving "wind direction and atmospheric stability" as close as possible to the "wind direction and atmospheric stability" of the weather data α at the subject date and time are extracted from the airflow field database DB1 rendered ready for use. The extracted airflow field data are subjected to interpolation. Since this procedure alone is sufficient, the airflow field data dt can be obtained in a short time, and accordingly, diffusion field data can be obtained in a short time.

### Prior Art Documents

### Patent Documents

Patent Document 1: JP-A-2005-283202
Patent Document 2: Japanese Patent No. 3712654

### Summary of the Invention

### Problems to be solved by the invention

Theoretically, it is possible to create the airflow field database DB1 as shown in Fig. 17. However, a concrete technique, which has a reduced computing load when creating the airflow field database and actually creates the airflow field database with high precision, has conventionally been inexistent.

The present invention has been accomplished in the light of the above-described conventional technologies. It is an object of the present invention to provide an airflow field database creation system which can create, with ease and with a reduced computing load, a high-precision airflow field database composed of airflow field data corresponding to respective cases covering different combinations of wind directions and atmospheric stabilities. It is another object of the present invention to provide a diffusion status prediction system for a diffusion material which can predict a diffusion status accurately and promptly with the use of the Airflow field database created by this airflow field database creation system.

### Means for solving the problems

A constitution of the present invention for solving the above problems is an airflow field database creation system, comprising:
a long-term wide-area airflow field data computing unit which has, wherein, a calculation region corresponding to a geographical region of a preset breadth including a subject point where a diffusion source exists, which has also, set therein, a calculation model for obtaining weather data by computing an equation for analyzing atmospheric phenomena, which sets weather data of global weather reanalysis data being global-scale long-term wide-area actual weather data as entrance boundary conditions for the calculation region, and which performs computations by the calculation model, thereby obtaining airflow field data at predetermined certain time intervals during a predetermined certain term, the airflow field data comprising weather data at positions of a plurality of grid points set in the calculation region;
an atmospheric stability calculation/addition unit which preselects one of the plurality of grid points as a representative grid point, and adds atmospheric stabilities to the respective airflow field data obtained by the long-term wide-area airflow field data computing unit, the atmospheric stabilities being calculated from the weather data at the positions of the representative grid points of the respective airflow field data;
a wind direction-based/atmospheric stability-based classification unit which, based on wind directions and the atmospheric stabilities at the representative grid points for the respective airflow field data, classifies the respective airflow field data into a plurality of cases covering different combinations of the wind directions and the atmospheric stabilities; and
a wind direction-based/atmospheric stability-based airflow field database creation unit which selects one of the airflow field data in a time zone, where the airflow field data exist consecutively in terms of time, as representative airflow field data for each of the cases into which the airflow field data have been classified, and associates the selected representative airflow field data with the case as the airflow field data for the case, thereby creating an Airflow field database.

Another constitution of the present invention is the above airflow field database creation system, wherein
in selecting one of the airflow field data in the time zone, where the airflow field data exist consecutively in terms of time, as the representative airflow field data for each of the cases,
the wind direction-based/atmospheric stability-based airflow field database creation unit
judges, for each of the cases, the time zones where the airflow field data exist consecutively in terms of time,
selects a longest time zone of the time zones,
if there are a plurality of the longest time zones, selects a chronologically preceding time zone, and
selects the airflow field data at an instant at a middle time in the thus selected longest time zone, or if the airflow field data is absent at the middle time, selects the airflow field data at an instant immediately before the middle time, as the representative airflow field data.

A further constitution of the present invention is an airflow field database creation system, comprising:
a calculation condition inputting unit which has, set therein, an atmospheric temperature vertical distribution classified by atmospheric stability, and a wind speed vertical distribution classified by atmospheric stability, and sets calculation conditions comprising combinations of the atmospheric temperature vertical distribution and the wind speed vertical distribution according to the atmospheric stability and wind direction data;
a steady airflow calculation unit which has, set therein, a calculation region corresponding to a geographical region of a preset breadth including a subject point where a diffusion source exists, which has also, set therein, a calculation model for obtaining weather data by computing an equation for analyzing atmospheric phenomena, which sets the calculation conditions comprising the combinations of the atmospheric temperature vertical distribution and the wind speed vertical distribution according to the atmospheric stability and the wind direction data inputted from the calculation condition inputting unit, as boundary conditions for the calculation region, and which performs computations by the calculation model, thereby obtaining airflow field data at predetermined certain time intervals during a predetermined certain term, the airflow field data comprising weather data at positions of a plurality of grid points set in the calculation region; and
a wind direction-based/atmospheric stability-based airflow field database creation unit which associates a plurality of the airflow field data, obtained by the steady airflow calculation unit, with cases covering different combinations of wind directions and the atmospheric stabilities, thereby creating a wind direction-based/atmospheric stability-based airflow field database.

An additional constitution of the present invention is a diffusion status prediction system for a diffusion material, comprising:
a storing unit which has in storage an Airflow field database composed of Airflow field data for a plurality of cases covering different combinations of wind directions and atmospheric stabilities in a subject point where a diffusion source discharging the diffusion material into an atmosphere is present;
a weather data inputting unit which inputs weather data at a subject date and time;
an airflow field data computing unit which obtains the wind direction and the atmospheric stability based on the weather data at the subject date and time inputted from the weather data inputting unit, takes from the storing unit a plurality of the airflow field data having the wind directions and the atmospheric stabilities as close as possible to the wind direction and the atmospheric stability of the weather data at the subject date and time, interpolatively computes the plurality of airflow field data to obtain the airflow field data having the wind direction and atmospheric stability identical with the wind direction and atmospheric stability of the weather data at the subject date and time, and feeds the airflow field data; and
a diffusion field data computing unit which substitutes the airflow field data fed from the airflow fielddata computing unit into a diffusion equation for computing a diffusion state of the diffusion material to obtain diffusion field data on the diffusion material, and
wherein the Airflow field database stored in the storing unit has been created by any of the aforementioned Airflow field database creation systems.

### Effects of the invention

According to the airflow field database creation system of the present invention, the global weather reanalysis data are set as the entrance boundary conditions for the calculation region, and the airflow field data in the calculation region are obtained by the calculation model. Then, the representative atmospheric stabilities and the representative airflow field data are obtained for the respective airflow field data, and the representative airflow field data are allocated to the plurality of cases covering the different wind directions and atmospheric stabilities. Simply by this procedure, creation of the airflow field database can be achieved. Thus, the airflow field database at the subject point where the diffusion source exists can be created accurately, although the computing load is reduced.

According to the airflow field database creation system of the present invention, moreover, the calculation conditions comprising combinations of the atmospheric temperature vertical distribution data and the wind speed vertical distribution data according to the atmospheric stability and the wind direction data for the plurality of directions are set as the entrance boundary conditions for the four sides of the calculation region, and airflow field data at the respective grid points in the calculation region are obtained by the calculation model, whereby the wind direction-based/atmospheric stability-based airflow field database can be created easily.

Furthermore, according to the diffusion status prediction system for a diffusion material in the present invention, when the airflow field data is to be obtained, CFD computation is not performed, but air flow field data involving "wind directions and atmospheric stabilities" as close as possible to the "wind direction and atmospheric stability" of the weather data at the subject date and time are extracted from the airflow field database rendered ready for use. The extracted airflow field data are subjected to interpolation. Since this procedure alone is sufficient, the airflow field data can be obtained in a short time, and accordingly, diffusion field data can be obtained in a short time.

### Brief Description of the Drawings

[Fig. 1] is a configuration diagram showing an airflow field database creation system according to Embodiment 1 of the present invention.
[Fig. 2] is an explanation drawing showing a calculation region.
[Fig. 3] is an explanation drawing showing airflow field data obtained by computations.
[Fig. 4] is an explanation drawing showing the airflow field date having stabilities added thereto.
[Fig. 5] is a characteristic view showing the occurrence status of wind direction-based/atmospheric stability-based airflow field data.
[Fig. 6] is an explanation drawing showing a technique for selecting representative airflow field data.
[Fig. 7] is an explanation drawing showing the technique for selecting representative airflow field data.
[Fig. 8] is an explanation drawing showing the technique for selecting representative airflow field data.
[Fig. 9] is a characteristic view showing a wind direction-based/atmospheric stability-based airflow field database.
[Fig. 10] is an explanation drawing showing a modification of Embodiments 1 and 2 of the present invention.
[Fig. 11] is a system configuration diagram showing an airflow field database creation system according to Embodiment 2 of the present invention.
[Fig. 12] is a characteristic view showing an atmospheric stability-based atmospheric temperature vertical distribution.
[Fig. 13] is a characteristic view showing an atmospheric stability-based wind speed vertical distribution.
[Fig. 14] is a characteristic view showing a wind direction-based/atmospheric stability-based airflow field database.
[Fig. 15] is a system configuration diagram showing a diffusion status prediction system for a diffusion material according to Embodiment 3 of the present invention.
[Fig. 16] is a system configuration diagram showing a conventional diffusion status prediction system.
[Fig. 17] is an explanation drawing showing a conventional airflow field data database.

### Mode for Carrying Out the Invention

A mode for carrying out the present invention will be described in detail based on embodiments of the invention.

### Embodiment 1

### Airflow field database creation system>

A first example of an airflow field database creation system will be described first of all.

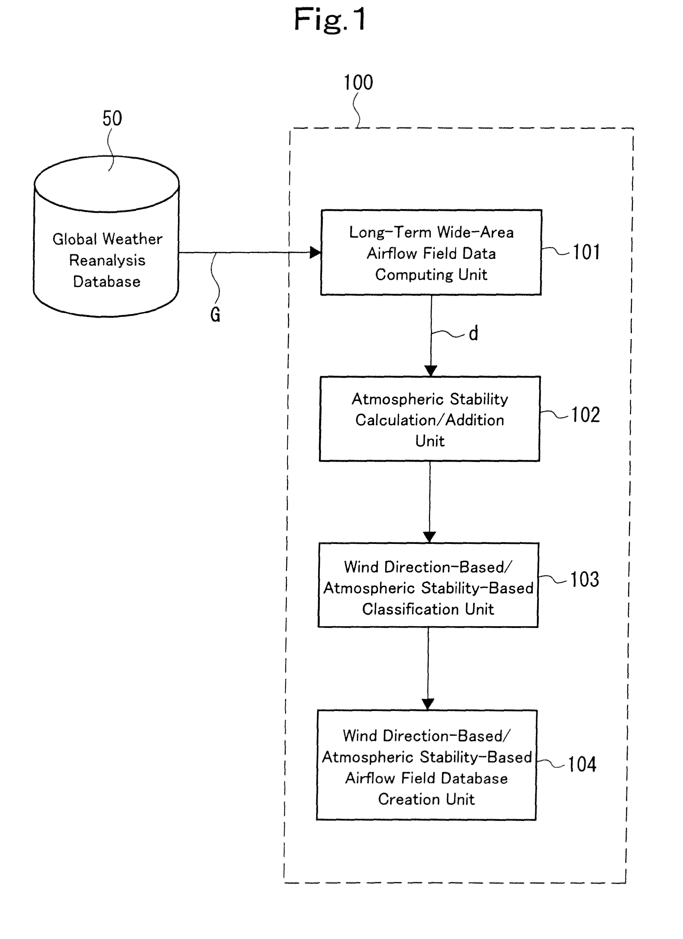

A first airflow field database creation system 100 is composed of a long-term wide-area airflow field data computing unit 101, an atmospheric stability calculation/addition unit 102, a wind direction-based/atmospheric stability-based classification unit 103, and a wind direction-based/atmospheric stability-based airflow field database creation unit 104, as shown in Fig. 1.

The airflow field database creation system 100 creates a wind direction -based/ atmospheric stability-based airflow field the database on the basis of global weather reanalysis data G obtained from a global weather reanalysis database 50.

The global weather reanalysis database 50 possesses the global weather reanalysis data which are long-term wide-area actual weather data on a global scale, and has, for example, hourly weather data in the past 50 to 100 years whose mesh space (grid space) is 200 Km.
Concrete examples of the global weather reanalysis data G from the global weather reanalysis database 50 are reanalysis data supplied mainly by NCEP (National Centers for Environmental Prediction), ERA-40 which are reanalysis data supplied by ECMWF (European Center for Medium-Range Weather Forecasts), and weather GPV (Grid Point Value) data.

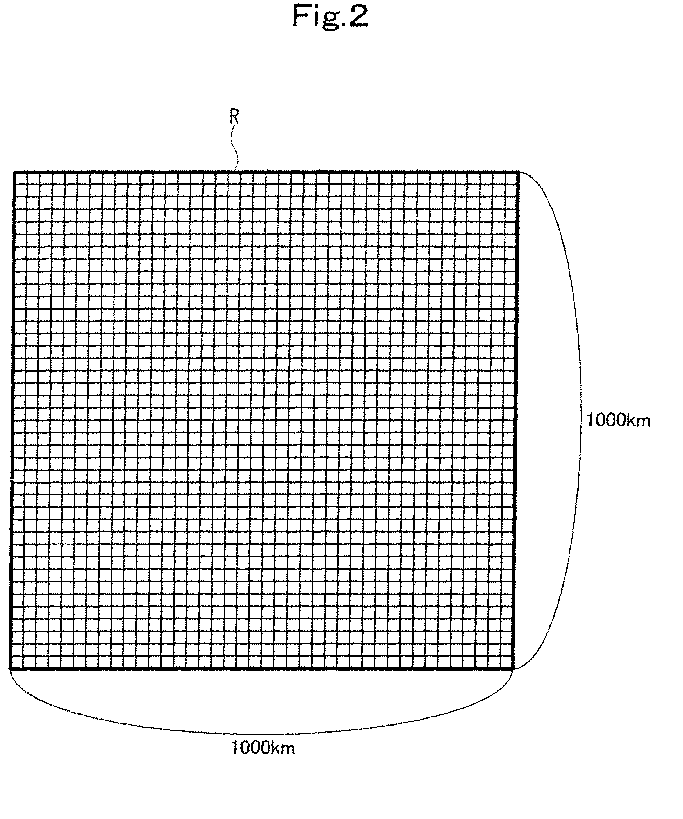

A calculation region R (see Fig. 2) corresponding to a geographical region including a subject point where a diffusion source (for example, a nuclear power plant) exists is set in the long-termwide-area airflow field data computing unit 101 of the airflow field database creation system 100. In this calculation region R, the length of one side, for example, corresponds to 1000 Km, which is divided in a grid pattern (divided, for example, into 40×40 spaces).

Further, a calculation model of a partial differential equation, for example, RAMS (Regional Atmospheric Modeling System) or WRF (Weather Research & Forecasting Model System), for obtaining weather data by the difference analysis computation of a partial differential equation for analysis of atmospheric phenomena is set in the long-term wide-area airflow field data computing unit 101 for obtaining weather data at the respective grid points (41×41 = 1681 locations) of the calculation region R by simulating computation.

The long-term wide-area airflow field competing unit 101 sets weather data of the global weather reanalysis data G obtained from the global weather reanalysis database 50, as the entrance boundary conditions for the four sides of the calculation region R, and performs computations by use of the calculation model such as the RAMS, thereby obtaining, for example, airflow field data comprising hourly weather data at the respective grid points in the past year.

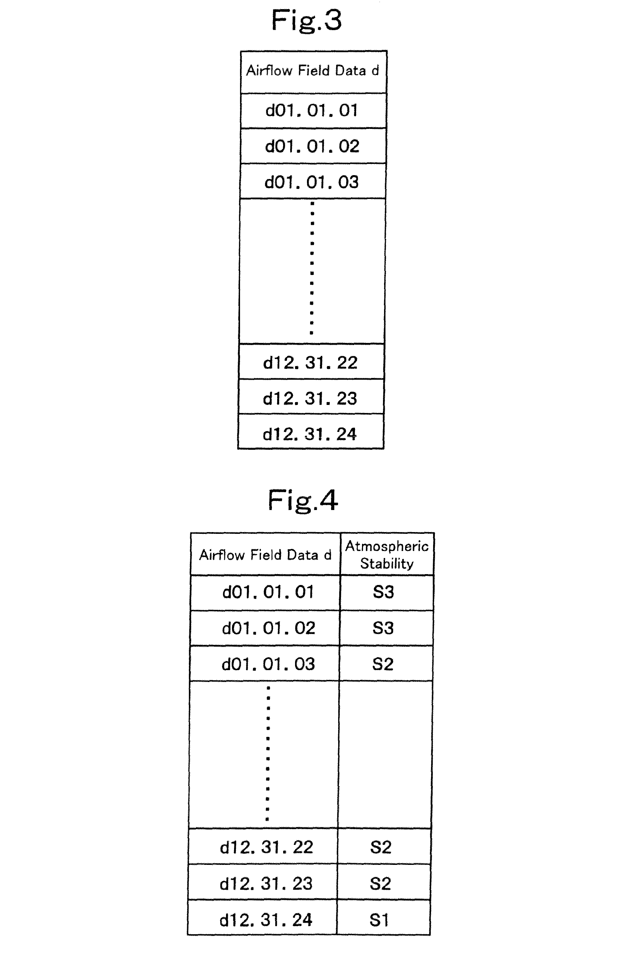

Fig. 3 shows airflow field data G computed by the long-term wide-area airflow field data computing unit 101. The airflow field data d01.01.01, for example, represents weather data at the respective grid points (41×41 = 1681 locations) at 1:00 on January 1. The airflow field data d01.01.02 represents weather data at the respective grid points (41×41 = 1681 locations) at 2:00 on January 1.
In this manner, the airflow field data d ranging from the airflow field data d01.01.01 at 1:00 on January 1 to the airflow field data d12.31.24 at 24: 00 on December 31, namely, 8760 (24 hours × 365 days) of the airflow field data d, are computed.

The atmospheric stability calculation/addition unit 102 calculates the atmospheric stabilities of the 8760 airflow field data d in the following manner:

The respective airflow field data d represent the weather data at the plurality of grid points (41×41 = 1681 locations) in the calculation region R. In this case, it is complicated to obtain all of the stabilities at the plurality of grid points (1681 locations). In this embodiment, therefore, one of the plurality of grid points is preselected as a representative grid point, and the atmospheric stability is calculated from the wind speed and the temperature of the weather data at this representative grid point. This atmospheric stability at the representative grid point is regarded as the atmospheric stability of the airflow field data d (weather data at the plurality of grid points).

Here, calculations are made, with the atmospheric stabilities being classified into three categories, unstable S1, neutral S2, and stable S3.

Further, the atmospheric stability calculation/addition unit 102 adds the atmospheric stability at the representative grid point obtained in the above-mentioned manner, as the atmospheric stability of each airflow field data d.

Fig. 4 shows the stabilities added in association with the respective airflow field data d.

For example, when the atmospheric stability obtained from the weather data at the representative grid point for the airflow field data d01.01.01 at 1:00 on January 1 is S3, the atmospheric stability S3 is added to the airflow field data d01.01.01 (weather data at 41×41 = 1681 locations at 1:00 on January 1). When the atmospheric stability obtained from the weather data at the representative grid point for the airflow field data d12.31.24at24:00 on december 31 is S1, the atmospheric stability S1 is added to the airflow field data d12.31.24 (weather data at 41×41 = 1681 locations at 24:00 on December 31).

The wind direction-based/atmospheric stability-based classification unit 103 has, set therein, classifications for 48 cases (16 directions × 3 stabilities) covering different combinations of wind directions and atmospheric stabilities, with the wind directions being 16 directions and the atmospheric stabilities being in the three categories. Which of the 48 cases the 8760 (24 hours × 365 days) airflow field data d belong to is determined by the wind direction and the atmospheric stability at the representative grid point for each airflow field data d.
That is, based on the wind direction and the atmospheric stability at the representative grid point for each airflow field data d, each airflow field data disclassified into any of the 48 cases covering different combinations of wind directions and atmospheric stabilities. In other words, each airflow field data d is allocated to the case of the same "wind direction and stability" as the "wind direction and atmospheric stability" at the representative point for the airflow field data d.

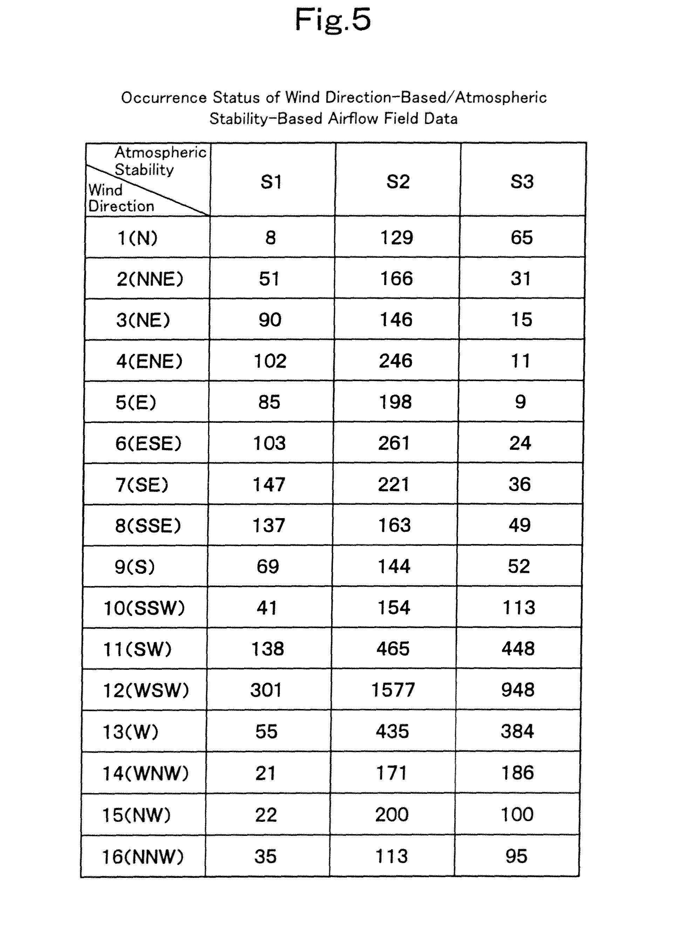

Fig. 5 shows the numbers of the airflow field data d classified into the respective cases when the airflow field data d were classified into the 48 cases (16×3 cases) covering different combinations of wind directions and atmospheric stabilities.
In Fig. 5, N denotes north, E denotes east, S denotes south, and W denotes west, and NNE, for example, represents the wind direction north-northeast.

A concrete explanation for Fig. 5 is as follows: For example, there are 8 of the airflow field data d in the case of the wind direction 1(N) and the atmospheric stability S1, and there are 129 of the airflow field data in the case of the wind direction 1(N) and the atmospheric stability S2.
As noted here, 8760 (24 hours × 365 days) of the airflow field data d are classified into any of the 48 cases (16 directions × 3 stabilities).

The wind direction-based/atmospheric stability-based airflow field database creation unit 104 selects one airflow field data d from each of the 48 cases (16 directions × 3 stabilities) (the method of selection will be described later), and takes this selected airflow field data d as representative airflow field data in that case (specific wind direction and specific atmospheric stability).

An explanation will be offered now for a technique for selecting the representative airflow field data d from among a plurality of the airflow field data d included in a single case (specific wind direction and specific atmospheric stability).

The technique for selection is as follows:
A plurality of the airflow field data are included in a specific single case (specific wind direction and specific atmospheric stability). Thus, time zones where the airflow field data exist consecutively in terms of time are judged, and the longest time zone of these time zones is selected. If there are a plurality of the longest time zones, a chronologically preceding time zone is selected.
The airflow field data at the middle point in time in the thus selected longest time zone (if the airflow field data is absent at the middle time, the airflow field data at the point in time immediately before the middle time) is taken as the representative airflow field data.

### The technique for selection will be described concretely by example.

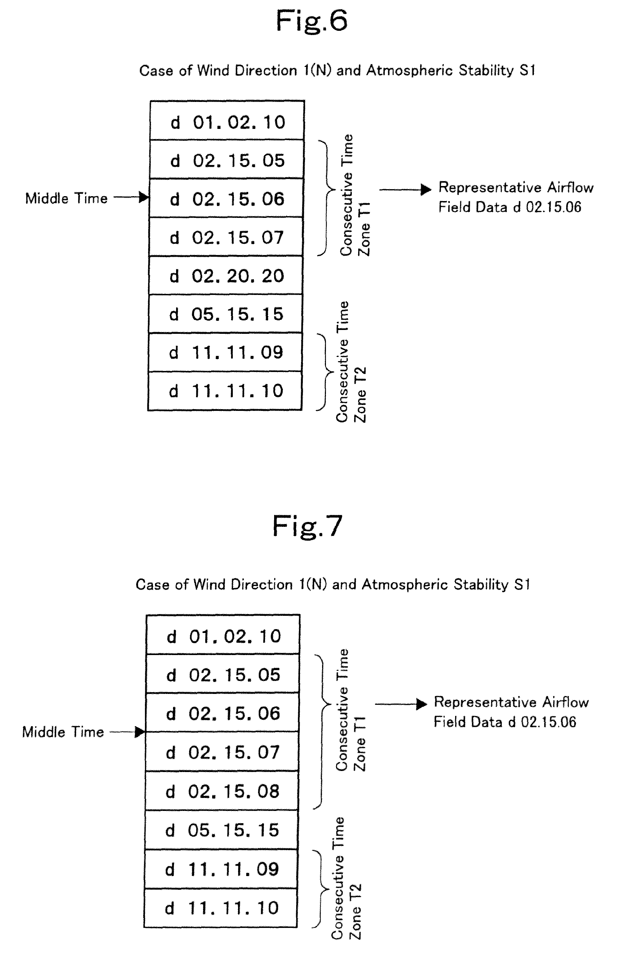

In a case where the wind direction is 1(N) and the atmospheric stability is S1, assume that eight of the airflow field data d as shown in Fig. 6 are included. In this instance, the airflow field data d02.15.05, d02.15.06 and d02.15.07 are present in a time zone T1 having three consecutive hours, and the airflow field data d11.11.09 and d11.11.10 are present in a time zone T2 having two consecutive hours. The airflow field data d02.15.06 at the middle time in the longest time zone T1 is taken as the representative airflow field data.

In the case where the wind direction is 1 (N) and the atmospheric stability is S1, assume that eight of the airflow field data d as shown in Fig. 7 are included. In this instance, the airflow field data d02.15.05, d02.15.06, d02.15.07 and d02.15.08 are present in a time zone T1 having four consecutive hours, and the airflow field data d11.11.09 and d11.11.10 are present in a time zone T2 having two consecutive hours. The airflow field data d02.15.06 at an instant immediately before the middle time in the longest time zone T1 is taken as the representative airflow field data.

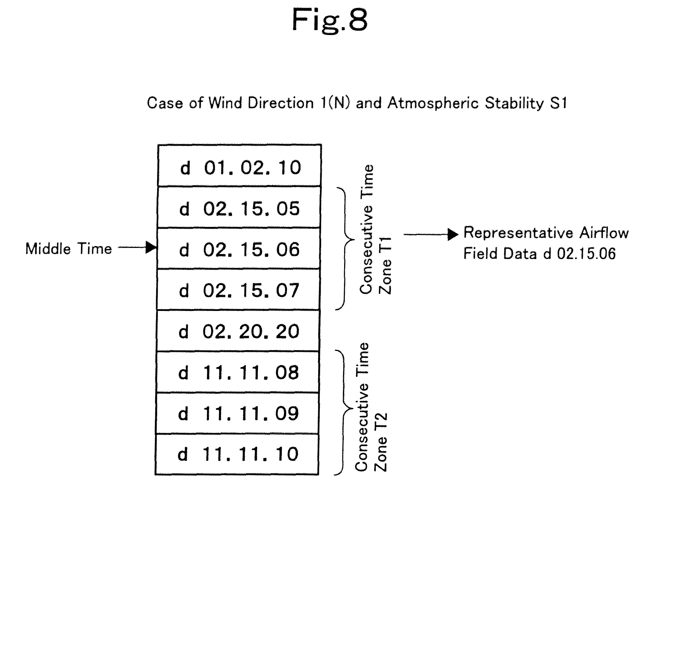

In the case where thewinddirection is 1 (N) and the atmospheric stability is S1, assume that eight of the airflow field data d as shown in Fig. 8 are included. In this instance, the airflow field data d02.15.05, d02.15.06 and d02.15.07 are present in a time zone T1 having three consecutive hours, and the airflow field data d11.11.08, d11.11.09 and d11.11.10 are present in a time zone T2 having three consecutive hours. The airflow field data d02.15.06 at an instant at the middle time in the chronologically preceding time zone T1 is taken as the representative airflow field data.

In other cases covering different combinations of the wind directions and the atmospheric stabilities, too, the representative airflow field data for the respective cases are selected.

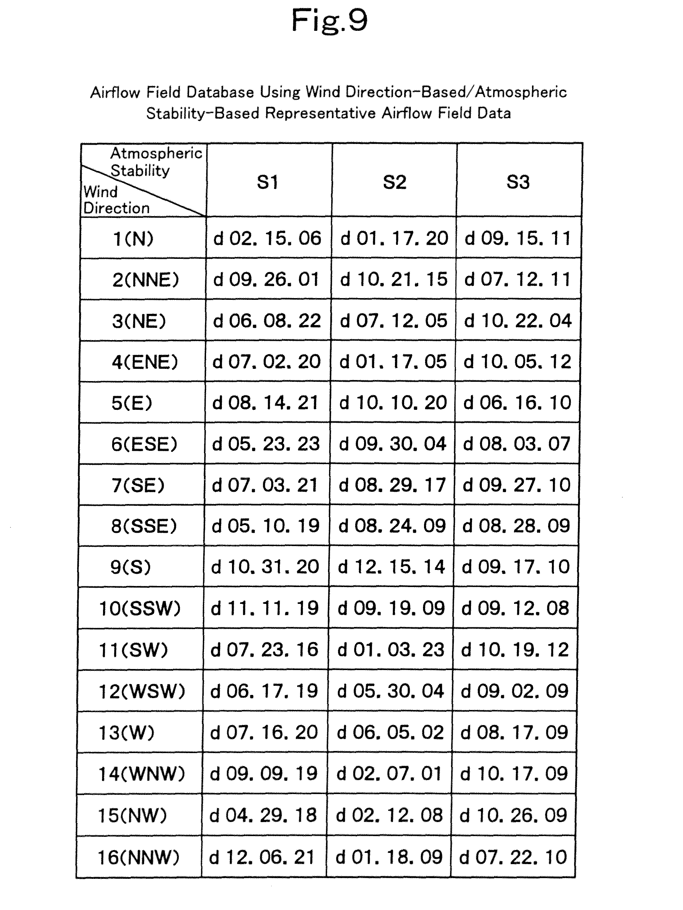

The wind direction-based/atmospheric stability-based airflow field database creation unit 104 sets the representative airflow field data d, which have been selected for the respective 48 cases (16 directions × 3 stabilities) covering different combinations of the wind directions and the atmospheric stabilities, as the airflow field data for these cases.
In this manner, the representative airflow field data d arse associated with the 48 cases (16 directions × 3 stabilities) to create an airflow field database as shown in Fig. 9.
In this airflow field database, the airflow field data for the case of the wind direction 1(N) and the atmospheric stability S1, for example, is set as the airflow field data d02.15.06. That is, in the case where the wind direction is 1(N) and the atmospheric stability is S1, the weather data at the respective grid point positions (41×41 = 1681 locations) are set as the airflow field data d02.15.06 at 6:00 on February 15.

According to the above-described system of Embodiment 1, the global weather reanalysis data G are set as the entrance boundary conditions for the calculation region R, and the airflow field data in the calculation region R are obtained by the calculation model. Then, the representative atmospheric stabilities and the representative airflow field data are obtained for the respective airflow field data, and the representative airflow field data are allocated to the 48 cases covering the different wind directions and atmospheric stabilities. Thus, the airflow field database for the subject point where the diffusion source exists can be created accurately, although the computing load is reduced.

### <Modification of Embodiment 1>

In Embodiment 1, the airflow field database showing the airflow field data for the respective cases covering the different wind directions and atmospheric stabilities, as shown in Fig. 9, was created in connection with the entire calculation region R shown in Fig. 2.

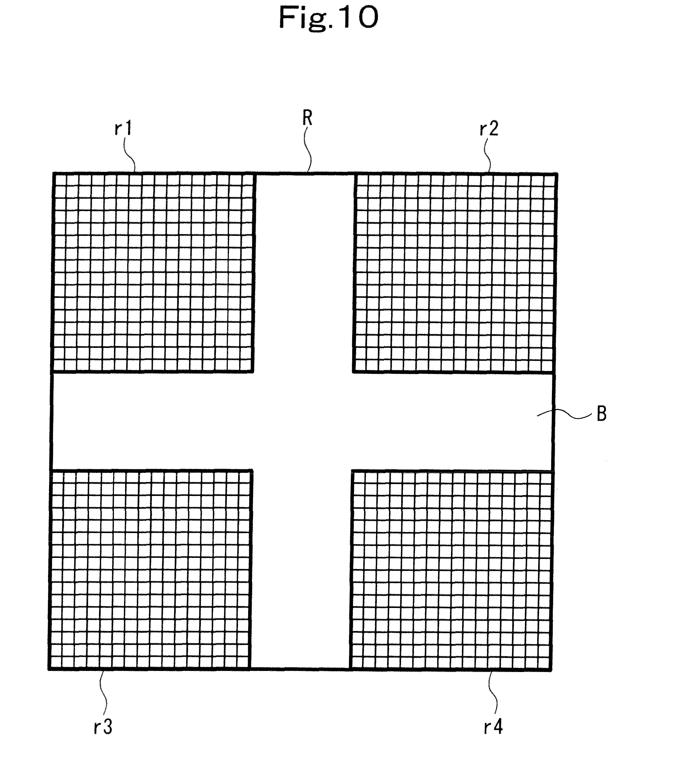

In a modification of Embodiment 1, the calculation region R is divided into a plurality of (for example, four) small calculation regions r1, r2, r3 and r4, and buffer regions B are set between these small calculation regions, as shown in Fig. 10.

In the respective small calculation regions r1, r2, r3 and r4, airflow field databases are individually created by the same technique as in Embodiment 1.

That is, an airflow field database DBr1 in the small calculation region r1, an airflow field database DBr2 in the small calculation region r2, an airflow field database DBr3 in the small calculation region r3, and an airflow field database DBr4 in the small calculation region r4 are created.
A database for the buffer region B is obtained by interpolating the airflow field databases DBr1, DBr2, DBr3 and DBr4.

In the above-described manner, an airflow field database for the entire calculation region R is created.
According to this technique, the airflow field data for more local regions (small calculation regions) can be obtained more precisely and rapidly.

### Embodiment 2

### <Airflow field database creation system>

Next, a second example of an airflow field database creation system will be described.

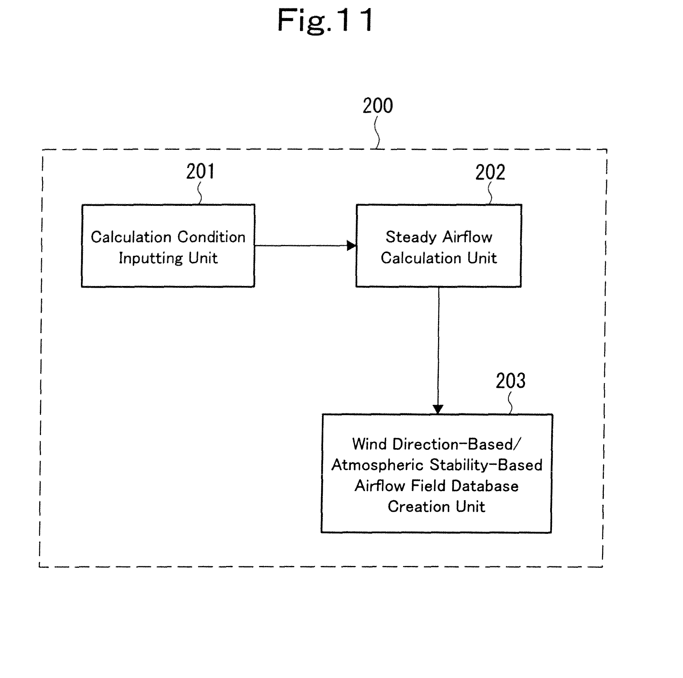

A second airflow field database creation system 200 is composed of a calculation condition inputting unit 201, a steady airflow calculation unit 202, and a wind direction-based/atmospheric stability-based airflow field database creation unit 203, as shown in Fig. 11.

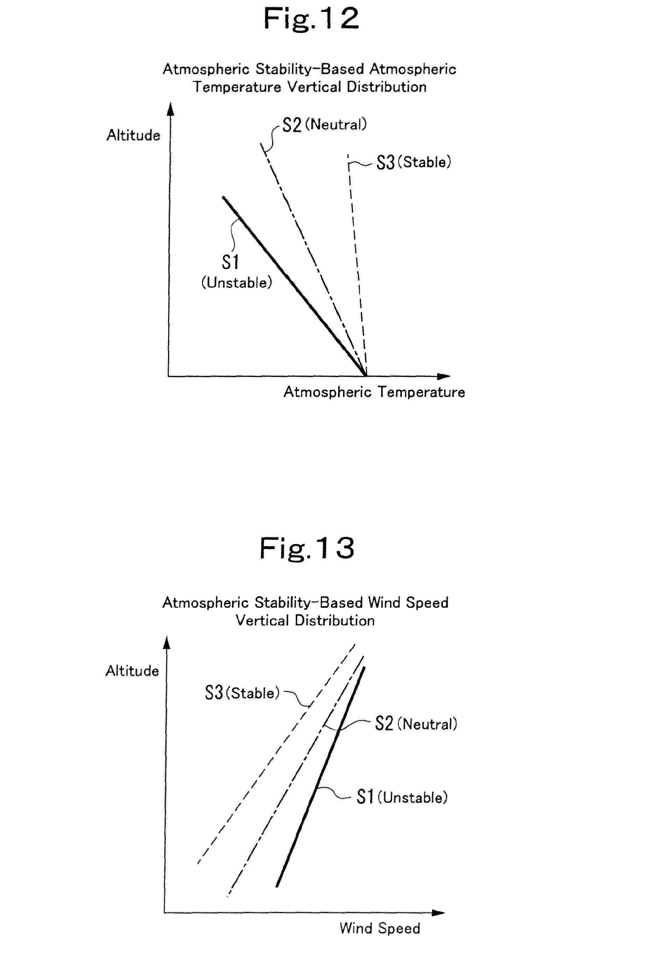

The calculation condition inputting unit 201 has, set therein, atmospheric temperature vertical distribution data classified by atmospheric stability (S1, S2, S3) as shown in Fig. 12, and wind speed vertical distribution data classified by atmospheric stability (S1, S2, S3) as shown in Fig. 13.

The atmospheric stability S1 represents an unstable state, the atmospheric stability S2 represents a neutral state, and the atmospheric stability S3 represents a stable state.

The calculation condition in putting unit201 inputs to the steady airflow calculation unit 202 respective calculation conditions for 48 cases covering different combinations of wind directions (16 directions) and atmospheric stabilities (3 stabilities). That is, the calculation condition inputting unit 201 inputs the calculation conditions comprising combinations of the atmospheric temperature vertical distribution data and the wind speed vertical distribution data according to the atmospheric stability and the wind direction data for the 16 directions.

Concretely, when the atmospheric stability is S1, the calculation condition inputting unit 201 inputs 16 calculation conditions comprising combinations of the atmospheric temperature vertical distribution data and the wind speed vertical distribution data for the atmospheric stability S1 and the wind direction data for the 16 directions,
when the atmospheric stability is S2, the calculation condition inputting unit 201 inputs 16 calculation conditions comprising combinations of the atmospheric temperature vertical distribution data and the wind speed vertical distribution data for the atmospheric stability S2 and the wind direct ion data for the 16 directions, and
when the atmospheric stability is S3, the calculation condition inputting unit 201 inputs 16 calculation conditions comprising combinations of the atmospheric temperature vertical distribution data and the wind speed vertical distribution data for the atmospheric stability S3 and the wind direction data for the 16 directions.

The steady airflow calculation unit 202 has, set therein, the calculation region R (see Fig. 2) corresponding to a geographical region including a subject point where a diffusion source (for example, a nuclear power plant) exists. In this calculation region R, the length of one side, for example, corresponds to 1000 Km, which is divided in a grid pattern (divided, for example, into 40 ×40 spaces).

Further, a calculation model of a partial differential equation, for example, RAMS (Regional Atmospheric Modeling System) or WRF (weather Research & Forecasting Model System), which is a dynamic meteorology model, or FLUENT (a trade name) or STAR-CD (a trade name) which is a hydrodynamic model, for obtaining weather data by the difference analysis computation of a partial differential equation for analysis of atmospheric phenomena is set in the steady airflow calculation unit 202 for obtaining weather data at the respective grid points (41×41 = 1681 locations) of the calculation region R by simulating computation.

The steady airflow calculation unit 202 sets the calculation conditions comprising combinations of the atmospheric temperature vertical distribution data and the wind speed vertical distribution data according to the atmospheric stability and the wind direction data for the 16 directions, which are entered from the calculation condition inputting unit 201, as the entrance boundary conditions for the four sides of the calculation region R.
By performing computations with the use of the calculation model such as the RAMS, the steady airflow calculation unit 202 obtains 48 of airflow field data, i.e., d1.S1 to d16.S3 (weather data at the respective grid points in the calculation region R), for the 48 cases covering different combinations of wind directions and atmospheric stabilities.

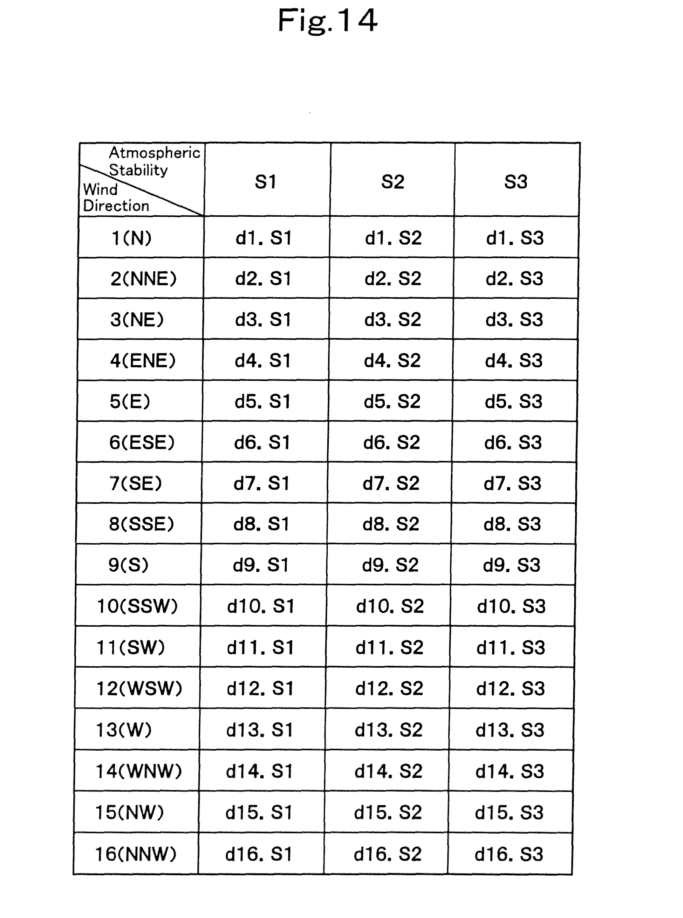

The wind direction-based/atmospheric stability-based airflow field database creation unit 203 associates the 48 airflow field data d1.S1 to d16.S3, obtained by the steady airflow calculation unit 202, with the 48 cases covering different combinations of wind directions and atmospheric stabilities, thereby creating a wind direction-based/atmospheric stability-based airflow field database as shown in Fig. 14.
For example, in Fig. 14, when the wind direction is 1 and the atmospheric stability is S1, the airflow field data is d1.S1.

In Embodiment 2, the calculation conditions comprising combinations of the atmospheric temperature vertical distribution data and the wind speed vertical distribution data according to the atmospheric stability and the wind direction data for the 16 directions are set as the entrance boundary conditions for the four sides of the calculation region R, and airflow field data at the respective grid points in the calculation region R are obtained by the calculation model, whereby the wind direction-based/atmospheric stability-based airflow field database can be created easily.

### <modification of Embodiment 2>

In Embodiment 2, the airflow field database showing the airflow field data for the respective cases covering the different wind directions and atmospheric stabilities, as shown in Fig. 14, was created in connection with the entire calculation region R shown in Fig. 2.

In a modification of Embodiment 2, the calculation region R is divided into a plurality of (for example, four) small calculation regions r1, r2, r3 and r4, and buffer regions B are set between these small calculation regions, as shown in Fig. 10.

In the respective small calculation regions r1, r2, r3 and r4, airflow field databases are individually created by the same technique as in Embodiment 2.

That is, an airflow field database DBr1 in the small calculation region r1, an airflow field database DBr2 in the small calculation region r2, an airflow field database DBr3 in the small calculation region r3, and an airflow field database DBr4 in the small calculation region r4 are created.
A database for the buffer region B is obtained by interpolating the airflow field databases DBr1, DBr2, DBr3, DBr4.

In the above-described manner, an airflow field database for the entire calculation region R is created.

According to this technique, the airflow field data for more local regions (small calculation regions) can be obtained more precisely and rapidly.

### Embodiment 3

### <Diffusion status prediction system for diffusion material>

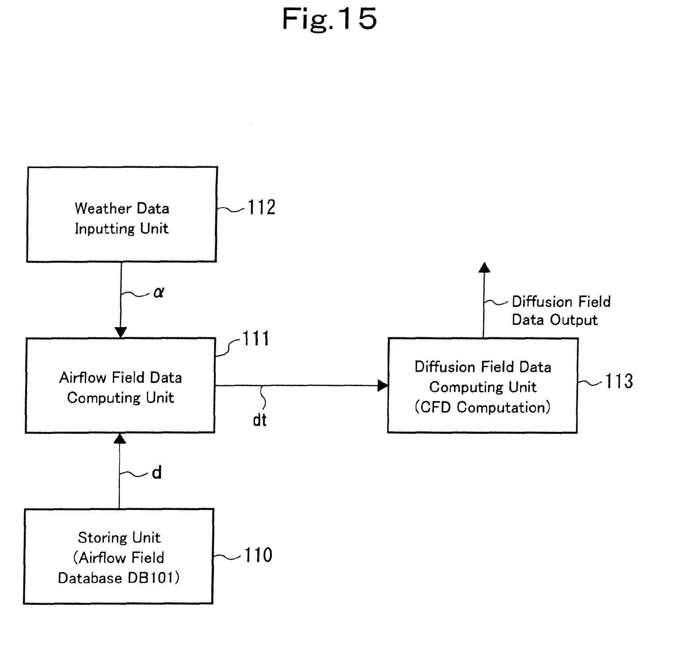

Next, a diffusion status prediction system for a diffusion material according to Embodiment 3 of the present invention will be described by reference to Fig. 15.

As shown in Fig. 15, a storing unit 110 has in storage the airflow field database (referred to as the airflow field database DB101) shown in Fig. 9 which was obtained by the airflow field database creation system 100 of Embodiment 1.

An airflow field data computing unit 111 receives, as an input, weather data α at a subject date and time from a weather data inputting unit 112. The subject date and time refers to a date and time at which a diffusion material (e.g., a radioactive substance) was discharged from a diffusion source (e.g., a nuclear power plant) to the atmosphere. The weather data α has any of 16 wind directions, a wind speed, an atmospheric temperature, a humidity, an amount of precipitation, an atmospheric pressure, etc., as data elements.

The airflow field data computing unit 111 sequentially performs the following computations:
(1) First, from the data elements (wind speed and atmospheric temperature, in particular) of the inputted weather data α, the atmospheric stability of the weather data α is computed.
(2) Then, a plurality of airflow field data involving "wind directions and atmospheric stabilities" as close as possible to the "wind direction and atmospheric stability" of the weather data α are extracted from the airflow field database DB101. The extracted plural airflow field data are subjected to interpolation to obtain, by computation, new airflow field data having the same "wind direction and atmospheric stability" as the "wind direction and atmospheric stability" of the weather data α. The new airflow field data is fed, as airflow field data dt, to a diffusion field data computing unit 113.

The diffusion field data computing unit 113 substitutes the airflow field data dt into a diffusion equation for computing the diffusion state of a diffusion material (particles) to obtain diffusion field data. Thisdiffusion field data shows the diffusion status of the diffusion material (diffusion region, diffusion concentrations), and the diffusion status can be predicted from the diffusion field data.

various types of "the diffusion equation for computing the diffusion state of a diffusion material (particles)" have been developed. For example, the HYPACT (Hybrid Particle And Concentration Transport Model) code developed by the Colorado State University and ATMET, U.S.A., is used.

According to this example, when the airflow field data dt is to be obtained, CFD computation is not performed, but airflow field data involving "wind directions and atmospheric stabilities" as close as possible to the "wind direction and atmospheric stability" of the weather data α at the subject date and time are extracted from the airflow field database DB101 rendered ready for use. The extracted airflow field data are subjected to interpolation. Since this procedure alone is sufficient, the airflow field data dt can be obtained in a short time, and accordingly, diffusion field data can be obtained in a short time.

In the foregoing Embodiment 3, the airflow field database obtained by Embodiment 1 (see Fig. 9) is used. However, it is also possible to use the airflow field database obtained by the modification of Embodiment 1, the airflow field database obtained by Embodiment 2 (see Fig. 14), or the airflow field database obtained by the modification of Embodiment 2.

### Industrial Applicability

The present invention can be applied not only to a diffusion status prediction system for a diffusion material, but also to an emergency assistance system of a nuclear facility, and a system for predicting damage due to NBC (Nuclear, Bio or Chemical Agents) terrorism.

### Description of the Numerals

50 Global weather reanalysis database
100 Airflow field database creation system
101 Long-term wide-area airflow field data computing unit
102 Atmospheric stability calculation/addition unit
103 Wind direction-based/atmospheric stability-based classification unit
104 Wind direction-based/atmospheric stability-based airflow field database creation unit
110 Storing unit
111 Airflow field data computing unit
112 Weather data inputting unit
113 Diffusion field data computing unit
200 Airflow field database creation system
201 Calculation condition inputting unit
202 Steady airflow calculation unit
203 Wind direction-based/atmospheric stability-based airflow field database creation unit

## Claims

1. An Airflow field database creation system, comprising:
a long-term wide-area airflow field data computing unit which has, set therein, a calculation region corresponding to a geographical region of a preset breadth including a subject point where a diffusion source exists, which has also, set therein, a calculation model for obtaining weather data by computing an equation for analyzing atmospheric phenomena, which sets weather data of global weather reanalysis data being global-scale long-term wide-area actual weather data as entrance boundary conditions for the calculation region, and which performs computations by the calculation model, thereby obtaining airflow field data at predetermined certain time intervals during a predetermined certain term, the airflow field data comprising weather data at positions of a plurality of grid points set in the calculation region;
an atmospheric stability calculation/addition unit which preselects one of the plurality of grid points as a representative grid point, and adds atmospheric stabilities to the respective airflow field data obtained by the long-term wide-area airflow field data computing unit, the atmospheric stabilities being calculated from the weather data at the positions of the representative grid points of the respective airflow field data;
a wind direction-based/atmospheric stability-based classification unit which, based on wind directions and the atmospheric stabilities at the representative grid points for the respective airflow field data, classifies the respective airflow field data into a plurality of cases covering different combinations of the wind directions and the atmospheric stabilities; and
a wind direction-based/atmospheric stability-based airflow field creation unit which selects one of the airflow field data in a time zone, where the airflow field data exist consecutively in terms of time, as representative airflow field data for each of the cases into which the airflow field data have been classified, and associates the selected representative airflow field data with the case as the airflow field data for the case, thereby creating an airflow field database.

2. The airflow field database creation system according to claim 1, wherein
in selecting one of the airflow field data in the time zone, where the airflow field data exist consecutively in terms of time, as the representative airflow field data for each of the cases,
the wind direction-based/atmospheric stability-based Airflow field database creation unit
judges, for each of the cases, the time zones where the airflow field data exist consecutively in terms of time,
selects a longest time zone of the time zones,
if there are a plurality of the longest time zones, selects a chronologically preceding time zone, and
selects the airflow field data at an instant at a middle time in the thus selected longest time zone, or if the airflow field data is absent at the middle time, selects the airflow field data at an instant immediately before the middle time, as the representative airflow field data.

3. An airflow field database creation system, comprising:
a calculation condition inputting unit which has, set therein, an atmospheric temperature vertical distribution classified by atmospheric stability, and a wind speed vertical distribution classified by atmospheric stability, and sets calculation conditions comprising combinations of the atmospheric temperature vertical distribution and the wind speed vertical distribution according to the atmospheric stability and wind direction data;
a steady airflow calculation unit which has, set therein, a calculation region corresponding to a geographical region of a preset breadth including a subject point where a diffusion source exists, which has also, set therein, a calculation model for obtaining weather data by computing an equation for analyzing atmospheric phenomena, which sets the calculation conditions comprising the combinations of the atmospheric temperature vertical distribution and the wind speed vertical distribution according to Atmospheric stability and the wind directions data inputted from the calculation condition inputting unit, as entrance boundary conditions for the calculation regions, and which performs computations by the calculation model, thereby obtaining Airflow field data at predetermined certain time intervals during a predetermined certain term, the airflow field comprising weather data at positions of a plurality of grid points set in the calculation region; and
a wind direction-based/atmospheric stability-based airflow field database creation unit which associates a plurality of the airflow field data, obtained by the steady airflow calculation unit, with case covering different combinations of wind directions the atmospheric stabilities, thereby creating a wind direction-based/atmospheric stability-based airflow field database.

4. A diffusion status prediction system for a diffusion material, comprising:
a storing unit which has in storage an airflow field database composed of airflow field data for a plurality of cases covering different combinations of wind directions and atmospheric stabilities ina subjectpoint whereadiffusion source discharging the diffusion material into an atmosphere is present;
a weather data inputting unit which inputs weather data at a subject date and time;
an airflow field data computing unit which obtains the wind direction and the atmospheric stability based on the weather data at the subject date and time inputted from the weather data inputting unit, takes from the storing unit a plurality of the airflow field data having the wind directions and the atmospheric stabilities as close as possible to the wind direction and the atmospheric stability of the weather data at the subject date and time, interpolatively computes the plurality of airflow field data to obtain the airflow field data having the wind direction and atmospheric stability identical with the wind direction and atmospheric stability of the weather data at the subject date and time, and feeds the airflow field data; and
a diffusion field data computing unit which substitutes the airflow field data fed from the airflow field data computing unit into a diffusion equation for computing a diffusion state of the diffusion material to obtain diffusion field data on the diffusion material, and
wherein the airflow field database stored in the storing unit has been created by the airflow field database creation system according to any one of claims 1 to 3.
